# EUROPEAN PATENT APPLICATION

(11) **EP 4 778 959 A1**
(43) Date of publication of application: **22.07.2026**
(21) Application number: 24863865.2
(22) Date of filing: 12.09.2024
(51) Int. Cl.: C08G 79/00, C07F 1/08, C07F 3/06, C07F 13/00, C07F 15/00, C07F 15/04, C07F 15/06, C07F 19/00

(54) **METHOD FOR PRODUCING TWO-DIMENSIONAL COORDINATION POLYMER, TWO-DIMENSIONAL COORDINATION POLYMER, AND SOLUTION FOR FORMING TWO-DIMENSIONAL COORDINATION POLYMER**

(30) Priority: 14.09.2023 JP 2023149526
(71) Applicant: TOKYO UNIVERSITY OF SCIENCE FOUNDATION, Tokyo 162-8601 (JP)
(72) Inventor: NISHIHARA, Hiroshi, Tokyo 162-8601 (JP); FUKUI, Naoya, Tokyo 162-8601 (JP); TAKADA, Kenji, Tokyo 162-8601 (JP); ITO, Miyu, Tokyo 162-8601 (JP)
(74) Representative: Isarpatent
(86) International application number: PCT/JP2024/032755
(87) International publication number: WO 2025/058039

(57) **Abstract**

A method of producing a two-dimensional coordination polymer, including a preparation step of preparing a Ni compound, a Pd compound, or a Pt compound, or a solution thereof, and benzenehexathiol, a derivative of benzenehexathiol, or a solution of at least one thereof, and a polymer formation step of preparing a single-phase solution including the Ni compound, the Pd compound, or the Pt compound, and the benzenehexathiol, and producing a two-dimensional coordination polymer in the single-phase solution, a two-dimensional coordination polymer that includes a constitutional unit represented by Formula (2) and a constitutional unit represented by Formula (3), and in which M¹ is Ni or Pt, or M² is Mn, Fe, Co, Ni, Cu, Zn, Pd, or Ag, and a solution for forming a two-dimensional coordination polymer are provided.

## Description

The present disclosure relates to a method of producing a two-dimensional coordination polymer, a two-dimensional coordination polymer, and a solution for forming a two-dimensional coordination polymer.

Substances having thicknesses of nanometer orders and two-dimensionally spreading structures have been referred to as "nanosheets", and are expected to be applied to electronic device materials. For example, nanosheets (two-dimensional coordination polymers) formed of coordination polymers have been energetically studied. For example, coordination polymers have been known as substances having structures in which constitutional units formed by coordination of multidentate ligands in central metals are continuously linked.

For example, two-phase interfacial synthesis methods as described in Japanese Patent Application Laid-Open (JP-A) No. 2023-74937 and JP-A No. 2023-84127 are known as conventional methods of producing two-dimensional coordination polymers.

A problem to be solved by the present disclosure is to provide a method of producing a two-dimensional coordination polymer, wherein the two-dimensional coordination polymer can be synthesized in a large amount.

Another problem to be solved by the present disclosure is to provide a novel two-dimensional coordination polymer.

Means for solving the above-described problems include the following aspects.
<1> A method of producing a two-dimensional coordination polymer, including:
   a preparation step of preparing a Ni compound, a Pd compound, or a Pt compound, or a solution A thereof, and benzenehexathiol, a derivative of benzenehexathiol, or a solution B of at least one thereof; and
   a polymer formation step of preparing a single-phase solution including the Ni compound, the Pd compound, or the Pt compound, and the benzenehexathiol, and producing a two-dimensional coordination polymer in the single-phase solution.
<2> The method of producing a two-dimensional coordination polymer according to <1>, wherein an obtained two-dimensional coordination polymer includes a constitutional unit represented by the following Formula (1): 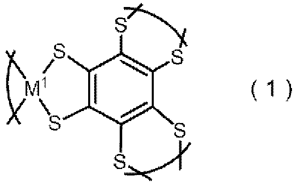 wherein in Formula (1), M¹ represents Ni, Pd, or Pt.
<3> The method of producing a two-dimensional coordination polymer according to <2>, wherein the M¹ is Ni or Pt.
<4> The method of producing a two-dimensional coordination polymer according to <1> or <2>, wherein
   the preparation step is a step of preparing the solution A of the Ni compound, the Pd compound, or the Pt compound, and the solution B including at least one of the benzenehexathiol or the derivative of the benzenehexathiol, and
   the polymer formation step is a step of mixing the solution A and the solution B to prepare the single-phase solution.
<5> The method of producing a two-dimensional coordination polymer according to <4>, wherein
   a solvent of the solution A is an alcohol compound, and
   a solvent of the solution B is an aprotic polar solvent.
<6> The method of producing a two-dimensional coordination polymer according to <4>, wherein
   a solvent of the solution A is a mixed solvent of water and an aprotic polar solvent, and
   a solvent of the solution B is a polar solvent.
<7> The method of producing a two-dimensional coordination polymer according to any one of <2> to <6>, further including a structural change step in which after the polymer formation step, the Ni compound, the Pd compound, or the Pt compound, or the solution A thereof is further added to the single-phase solution to produce a two-dimensional coordination polymer including a constitutional unit represented by the following Formula (2): 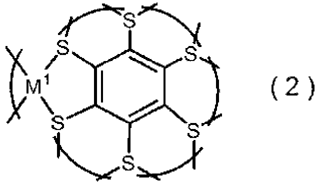 wherein in Formula (2), M¹ represents Ni, Pd, or Pt.
<8> The method of producing a two-dimensional coordination polymer according to any one of <1> to <7>, further including:
   a dissimilar metal polymer formation step in which after the polymer formation step, a Mn compound, an Fe compound, a Co compound, a Ni compound, a Cu compound, a Zn compound, a Pd compound, or a Ag compound, or a solution C thereof is added to the single-phase solution.
<9> The method of producing a two-dimensional coordination polymer according to any one of <4> to <8>, wherein an amount of the Ni compound, the Pd compound, or the Pt compound in the preparation step is from 1.4 molar equivalents to 1.6 molar equivalents with respect to 1 molar equivalent of the benzenehexathiol or the derivative thereof.
<10> The method of producing a two-dimensional coordination polymer according to any one of <4> to <9>, wherein the amount of the Ni compound, the Pd compound, or the Pt compound in the preparation step is from 2.9 molar equivalents to 3.1 molar equivalents with respect to 1 molar equivalent of the benzenehexathiol or the derivative thereof.
<11> A two-dimensional coordination polymer including a constitutional unit represented by the following Formula (2) and a constitutional unit represented by the following Formula (3), wherein
   the following M¹ is Ni or Pt, and
   the following M² is Mn, Fe, Co, Ni, Cu, Zn, Pd, or Ag
   (wherein the M² does not represent Ni in a case in which the M¹ is Ni).
<12> The two-dimensional coordination polymer according to <11>, wherein a molar ratio between the M¹ and the M² (M¹:M²) is from 1.0:0.1 to 1.0:3.0.
<13> A two-dimensional coordination polymer obtained by the method of producing a two-dimensional coordination polymer according to any one of <1> to <10>.
<14> A solution for forming a two-dimensional coordination polymer, which is a single-phase solution including:
   a Ni compound, a Pd compound, or a Pt compound; and
   at least one of benzenehexathiol or a derivative of benzenehexathiol.

In accordance with the present disclosure, a method of producing a two-dimensional coordination polymer, wherein the two-dimensional coordination polymer can be synthesized in a large amount, is provided.

In accordance with the present disclosure, a novel two-dimensional coordination polymer is provided.

### BRIEF DESCRIPTION OF DRAWINGS

FIG. 1 illustrates the Raman spectra of two-dimensional coordination polymers in Examples 1, 5, 6, and 7.
FIG. 2 illustrates the EDS spectra of the two-dimensional coordination polymers in Examples 1, 5, 6, and 7.
FIG. 3 illustrates the Raman spectrum of each Pt₁M₂BHT in Example 13.
FIG. 4 illustrates the results of the volume-average particle diameters of two-dimensional coordination polymers in Examples 1 and 3, obtained by dynamic light scattering (DLS) analysis.

Embodiments of the present disclosure are described in detail below. The present disclosure is not limited to the following embodiments at all. The following embodiments may be modified within the scope of an objective of the present disclosure, if appropriate.

In the present disclosure, a numerical range expressed by "x to y" means a range including the values of x and y as the lower and upper limit values, respectively.

In a numerical range expressed in a stepwise manner in the present disclosure, the upper limit value expressed in a certain numerical range may be replaced by the upper limit value in another numerical range expressed in a stepwise manner, and the lower limit value expressed in a certain numerical range may be replaced by the lower limit value in another numerical range expressed in a stepwise manner. In a numerical range expressed in a stepwise manner in the present disclosure, the upper or lower limit value expressed in a certain numerical range may be replaced by values described in Examples.

In the present disclosure, the term "step" encompasses not only an independent step but also a step incapable of being definitely distinguished from another step in a case in which the desired objective of the step is achieved.

In the present disclosure, in a case in which plural kinds of substances exist corresponding to each component in a composition, the amount of each component in the composition means, unless otherwise specified, the total amount of the plural kinds of substances existing in the composition.

In the present disclosure, a combination of preferred aspects is a more preferred aspect.

In the present disclosure, room temperature means environmental temperature that is not particularly controlled, and encompasses a temperature range of from 15°C to 30°C. Unless otherwise specified, room temperature under a measurement condition means 25°C ± 2°C.

### <Method of Producing Two-Dimensional Coordination Polymer>

A method of producing a two-dimensional coordination polymer according to the present disclosure includes: (i) a preparation step of preparing a Ni compound, a Pd compound, or a Pt compound, or a solution A thereof, and benzenehexathiol, a derivative of benzenehexathiol, or a solution B of containing at least one thereof; and (ii) a polymer formation step of preparing a single-phase solution containing the Ni compound, the Pd compound, or the Pt compound, and benzenehexathiol, and producing a two-dimensional coordination polymer in the single-phase solution.

As described above, two-phase interface synthesis method as described in JP-A No. 2023-74937 or JP-A No. 2023-84127 is known as a conventional method of producing a two-dimensional coordination polymer.

However, it has been difficult to produce a large amount of two-dimensional coordination polymer by such a method because the synthesis proceeds at an interface. Reaction control is also difficult because interfacial reactions involve complicated factors such as mass transport and diffusion of a substances.

In accordance with the method of producing a two-dimensional coordination polymer according to the present disclosure, the two-dimensional coordination polymer can be synthesized in a large amount by performing the synthesis in a single-phase solution.

In addition, reaction control is facilitated, and it is easy to selectively produce, for example, an M_{1.5}BHT-type or M₃BHT-type two-dimensional coordination polymer described later. Furthermore, a two-dimensional coordination polymer containing a dissimilar metal can also be readily produced.

Herein, a single-phase solution refers to a solution in which neither solid precipitation nor phase separation (layer separation) is observed, and includes a colloidal solution.

The structure of a two-dimensional coordination polymer obtained by the method of producing a two-dimensional coordination polymer according to the present disclosure is not particularly limited as long as the two-dimensional coordination polymer is a two-dimensional coordination polymer that includes a Ni compound, a Pd compound, or a Pt compound, and benzenehexathiol, and can become a single-phase two-dimensional coordination polymer in a solution.

The two-dimensional coordination polymer obtained by the method of producing a two-dimensional coordination polymer according to the present disclosure preferably includes, for example, a constitutional unit represented by the following Formula (1).

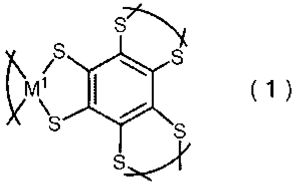

In Formula (1), M¹ represents Ni, Pd, or Pt, and preferably represents Ni or Pt.

### [Preparation Step]

The method of producing a two-dimensional coordination polymer according to the present disclosure includes the preparation step of preparing the Ni compound, the Pd compound, or the Pt compound, or the solution A thereof, and benzenehexathiol, the derivative of benzenehexathiol, or the solution B of at least one thereof.

The Ni compound, the Pd compound, or the Pt compound is preferably a divalent Ni compound, Pd compound, or Pt compound from the viewpoint of a property of forming a two-dimensional coordination polymer.

The Ni compound, the Pd compound, or the Pt compound is preferably a Ni compound from the viewpoint of a property of forming a two-dimensional coordination polymer. As the Ni compound, the Pd compound, or the Pt compound, a Ni, Pd, or Pt compound that is synthesized may be used, or a Ni, Pd, or Pt compound that is a commercially available product may be used.

The Ni compound is not particularly limited, and examples thereof include nickel formate, nickel acetate, nickel lactate, nickel chloride, nickel bromide, nickel carbonate, nickel nitrate, nickel sulfate, nickel oxide, a nickel acetylacetonate complex, a nickel ethylenediamine complex, a nickel ethylenediaminetetraacetate complex, and hydrates thereof.

Especially, the Ni compound is preferably nickel acetate, nickel chloride, nickel bromide, a nickel acetylacetonate complex, or a hydrate thereof, and more preferably nickel acetate or a hydrate thereof, from the viewpoint of stability and a property of forming a two-dimensional coordination polymer.

The Pd compound is not particularly limited, and examples thereof include potassium hexachloropalladate(IV) (that is, K₂[PdCl₆]), potassium tetrachloropalladate(II) (that is, K₂[PdCl₄]), sodium tetrachloropalladate(II) (that is, Na₂[PdCl₄]), palladium acetate(II), palladium chloride(II), palladium bromide(II), dichlorobis(acetonitrile)palladium(II) (that is, Pd(CH₃CN)₂Cl₂), dichlorobis(ethylenediamine)palladium(II), an acetylacetonate palladium(II) complex, and hydrates thereof.

The Pt compound is not particularly limited, and examples thereof include potassium hexachloroplatinate(IV) (that is, K₂[PtCl₆]), potassium tetrachloroplatinate(II) (that is, K₂[PtCl₄]), sodium tetrachloroplatinate(II) (that is, Na₂[PtCl₄]), platinum chloride(II), platinum bromide(II), dichlorobis(acetonitrile)platinum(II) (that is, Pt(CH₃CN)₂Cl₂), dichlorobis(ethylenediamine)platinum(II), an acetylacetonate platinum(II) complex, and hydrates thereof.

In the preparation step, the solution A of the Ni compound, the Pd compound, or the Pt compound is preferably prepared from the viewpoint of a reaction rate and a property of forming a two-dimensional coordination polymer.

A solvent used in the solution A of the Ni compound, the Pd compound, or the Pt compound is not particularly limited as long as the compound can be dissolved in the solvent. The solvent is preferably a polar solvent, more preferably a protic polar solvent, and still more preferably an alcohol compound from the viewpoint of solubility and a property of forming a two-dimensional coordination polymer.

In the present disclosure, the polar solvent refers to a solvent having a relative permittivity of 5 or more at 25°C.

Specific examples of the polar solvent include water, methanol, ethanol, 1-propanol, 2-propanol, 1-butanol, 2-butanol, isobutyl alcohol, isopentyl alcohol, cyclohexanol, ethylene glycol, propylene glycol, 2-methoxyethanol, 2-ethoxyethanol, benzyl alcohol, diethylene glycol, triethylene glycol, glycerin, tetrahydrofuran, dimethoxyethane, acetone, ethyl methyl ketone, ethyl acetate, butyl acetate, ethylene carbonate, propylene carbonate, formaldehyde, N-methylformamide, N,N-dimethylformamide, N-methylacetamide, N,N-dimethylacetamide, N-methyl-2-pyrrolidone, hexamethylphosphoramide, acetonitrile, propyronitrile, nitromethane, nitrobenzene, and dimethylsulfoxide (DMSO).

Especially, the polar solvent is preferably a polar solvent other than water, more preferably an alcohol compound, and particularly preferably at least one solvent selected from the group consisting of methanol, ethanol, and 2-propanol from the viewpoint of solubility, removal easiness, and a property of forming a two-dimensional coordination polymer.

As the solvent used in the solution A of the Ni compound, the Pd compound, or the Pt compound, one kind of such a solvent may be used singly, or two or more kinds of such solvents may be used.

The content of the solvent is not particularly limited, and can be selected, if appropriate, depending on the solubility of each of the Ni compound, the Pd compound, or the Pt compound, a desired two-dimensional coordination polymer, the solubility of an obtained two-dimensional coordination polymer, or the like.

Benzenehexathiol (BHT) may be a commercially available product, or may be produced based on a method described in the known literature. Examples of the literature include Jennifer A. Harnisch, Robert J. Angelici, Inorganica Chimica Acta, Volumes 300-302, 20 April 2000, Pages 273-279.

The derivative of benzenehexathiol can also be used.

The derivative of benzenehexathiol is not particularly limited as long as the derivative is a compound substituted for benzenehexathiol. Examples of the derivative include tin-protected benzenehexathiol. Examples of the literature include Tigmansu Pal, Shotaro Doi, Hiroaki Maeda, Keisuke Wada, Choon Meng Tan, Naoya Fukui, Ryota Sakamoto, Shinji Tsuneyuki, Sono Sasaki and Hiroshi Nishihara, Chem. Sci., Volumes 10, 17 April 2019, Pages 5218-5225.

Examples of tin-protected benzenehexathiol include the following compound.

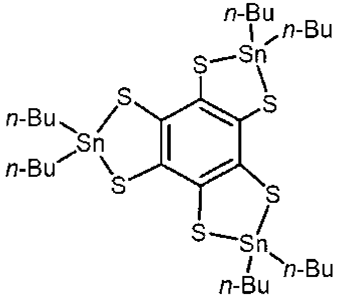

In the preparation step, the solution B of benzenehexathiol or the derivative thereof is preferably prepared from the viewpoint of a reaction rate and a property of forming a two-dimensional coordination polymer.

The solvent used in the solution B of benzenehexathiol or the derivative thereof is not particularly limited as long as benzenehexathiol or the derivative thereof can be dissolved in the solvent. The solvent is preferably an aprotic polar solvent, a halogen-based solvent, a polar solvent, or a mixed solvent thereof from the viewpoint of solubility and a property of forming a two-dimensional coordination polymer.

Examples of the aprotic polar solvent include tetrahydrofuran, N,N-dimethylformamide, N,N-dimethylacetamide, N-methyl-2-pyrrolidone, acetonitrile, nitromethane, and dimethylsulfoxide (DMSO) from the viewpoint of solubility, removal easiness, and a property of forming a two-dimensional coordination polymer.

Examples of the halogen-based solvent include dichloromethane, chloroform, 1,2-dichloroethane, carbon tetrachloride, chlorobenzene, and dichlorobenzene.

Examples of the polar solvent include the polar solvents described above.

Among the above, the solvent used in the solution B of benzenehexathiol or the derivative thereof is more preferably at least one solvent selected from the group consisting of acetone, dichloromethane, tetrahydrofuran, and dimethylsulfoxide.

As the solvent used in the solution B of benzenehexathiol or the derivative thereof, one kind of such a solvent may be used singly, or two or more kinds of such solvents may be used.

The content of the solvent is not particularly limited, can be selected, if appropriate, depending on the solubility of benzenehexathiol or the derivative thereof, a desired two-dimensional coordination polymer, the solubility of an obtained two-dimensional coordination polymer, or the like, and is preferably not more than the saturated concentration of benzenehexathiol or the derivative thereof having a concentration of 0.001 mM (= 0.001 mmol/L) or more, more preferably not more than the saturated concentration of benzenehexathiol or the derivative having a concentration of 0.01 mM or more, and particularly preferably not more than the saturated concentration of benzenehexathiol or the derivative thereof having a concentration of 0.05 mM or more.

The concentration of the solution A in the preparation step is preferably from 0.10 mmol/L to 1.00 mmol/L, and more preferably from 0.17 mmol/L to 0.50 mmol/L, for example, in the case of producing a two-dimensional coordination polymer including Pt and having a constitutional unit represented by Formula (1). It is easy to more efficiently synthesize the two-dimensional coordination polymer having the constitutional unit represented by Formula (1) in a large amount in a case in which the concentration of the solution A is within the range described above.

The concentration of the solution A in the preparation step is preferably from 0.30 mmol/L to 2.00 mmol/L, and more preferably from 0.50 mmol/L to 1.50 mmol/L, for example, in the case of producing a two-dimensional coordination polymer including Pt and having a constitutional unit represented by Formula (2). It is easy to more efficiently synthesize the two-dimensional coordination polymer having the constitutional unit represented by Formula (2) in a large amount in a case in which the concentration of the solution A is within the range described above.

The concentration of the solution A in the preparation step is preferably from 0.03 mmmol/L to 0.20 mmol/L, and more preferably from 0.05 mmol/L to 0.15 mmol/L, for example, in the case of producing a two-dimensional coordination polymer including Ni and having a constitutional unit represented by Formula (1). It is easy to more efficiently synthesize the above-described two-dimensional coordination polymer having the constitutional unit represented by Formula (1) in a large amount in a case in which the concentration of the solution A is within the range described above.

The concentration of the solution A in the preparation step is preferably from 0.10 mmol/L to 0.50 mmol/L, and more preferably from 0.15 mmol/L to 0.45 mmol/L, for example, in the case of producing a two-dimensional coordination polymer including Ni and having a constitutional unit represented by Formula (2). It is easy to more efficiently synthesize the above-described two-dimensional coordination polymer having the constitutional unit represented by Formula (2) in a large amount in a case in which the concentration of the solution A is within the range described above.

The concentration of the solution B in the preparation step is preferably from 1.50 mmol/L to 3.50 mmol/L, and more preferably from 1.00 mmol/L to 3.00 mmol/L, for example, in the case of producing a two-dimensional coordination polymer including Pt. It is easy to more efficiently synthesize the two-dimensional coordination polymer in a large amount in a case in which the concentration of the solution B is within the range described above.

The concentration of the solution B in the preparation step is preferably from 0.03 mmol/L to 0.20 mmol/L, and more preferably from 0.10 mmol/L to 0.20 mmol/L, for example, in the case of producing a two-dimensional coordination polymer including Ni. It is easy to more efficiently synthesize the two-dimensional coordination polymer in a large amount in a case in which the concentration of the solution B is within the range described above.

In one aspect, it is preferable that in the method of producing a two-dimensional coordination polymer according to the present disclosure, the preparation step is a step of preparing the solution A of the Ni compound, the Pd compound, or the Pt compound, and the solution B including at least one of the benzenehexathiol or the derivative of the benzenehexathiol, and the polymer formation step is a step of mixing the solution A and the solution B to prepare the single-phase solution.

It is easy to more efficiently synthesize the above-described two-dimensional coordination polymer in a large amount in the case of the aspect described above.

In one aspect, it is preferable that the solvent of solution A is an alcohol compound, and the solvent of solution B is an aprotic polar solvent in a case in which M¹ is Ni in the production of a two-dimensional coordination polymer having constitutional units represented by Formulae (1) to (3).

It is easy to more efficiently synthesize the two-dimensional coordination polymer in a large amount in a case in which a combination of the solvent A and the solvent B in the preparation step is a combination in the aspect described above.

A preferred aspect of each of the alcohol compound or the aprotic polar solvent is as described above.

In one aspect, it is preferable that the solvent of the solution A is a mixed solvent of water and an aprotic polar solvent, and the solvent of the solution B is a polar solvent in a case in which M¹ is Pt in the production of a two-dimensional coordination polymer having constitutional units represented by Formulae (1) to (3).

It is easy to more efficiently synthesize the two-dimensional coordination polymer in a large amount in a case in which a combination of the solvent A and the solvent B in the preparation step is a combination in the aspect described above.

A preferred aspect of each of the polar solvent and the aprotic polar solvent is as described above.

### [Polymer Formation Step]

The method of producing a two-dimensional coordination polymer according to the present disclosure includes a polymer formation step of preparing a single-phase solution including the Ni compound, the Pd compound, or the Pt compound, and the benzenehexathiol, and producing a two-dimensional coordination polymer in the single-phase solution.

In the polymer formation step, the solution of the Ni compound, the Pd compound, or the Pt compound, and the solution of the benzenehexathiol or the derivative thereof are preferably mixed to prepare the single-phase solution from the viewpoint of a reaction rate and a property of forming a two-dimensional coordination polymer.

The mixture ratio between the Ni compound, the Pd compound, or the Pt compound, and the benzenehexathiol or the derivative thereof in the polymer formation step is not particularly limited, and the amount of the Ni compound, the Pd compound, or the Pt compound is preferably from 0.9 molar equivalent to 3.4 molar equivalents, more preferably from 1.4 molar equivalents to 3.1 molar equivalents, still more preferably from 1.4 molar equivalents to 1.6 molar equivalents or from 2.9 molar equivalents to 3.1 molar equivalents, and particularly preferably from 1.45 molar equivalents to 1.55 molar equivalents or from 2.95 molar equivalents to 3.05 molar equivalents with respect to 1 molar equivalent of the benzenehexathiol or the derivative thereof from the viewpoint of a property of forming a two-dimensional coordination polymer.

The two-dimensional coordination polymer may be dissolved in a single-phase solution, or may be in the form of colloidal particles.

In the case of colloidal particles, the volume-average particle diameter of the two-dimensional coordination polymer is preferably from 10 nm to 100 nm, more preferably from 20 nm to 80 nm, and still more preferably from 20 nm to 70 nm.

The volume-average particle diameter of the two-dimensional coordination polymer is a value measured by dynamic light scattering using a particle size distribution measurement apparatus (NANOPARTICA SZ-100V2 SERIES, manufactured by HORIBA, Ltd.).

In the case of mixing the solution of the Ni compound, the Pd compound, or the Pt compound with the solution of the benzenehexathiol to prepare the single-phase solution, the solvent of the solution of the Ni compound, the Pd compound, or the Pt compound, and the solvent of the solution of the benzenehexathiol or the derivative thereof are not particularly limited as long as the solvents form a single-phase solution. The solvent of the solution of the Ni compound, the Pd compound, or the Pt compound, and the solvent of the solution of the benzenehexathiol or the derivative thereof may be different solvents, or the solvents used may be the same.

In one aspect, from the viewpoint of a property of forming a two-dimensional coordination polymer, the preparation step is a step of preparing the solution A of the Ni compound and the solution B of benzenehexathiol, and the polymer formation step may be a step in which the solution A and the solution B are mixed to prepare the single-phase solution. In such a case, it is more preferable that the solvent of the solution A is an alcohol compound, and the solvent of the solution B is an aprotic polar solvent, and it is particularly preferable that the solvent of solution A is methanol, and the solvent of solution B is at least one of tetrahydrofuran or acetone.

In one aspect, from the viewpoint of a property of forming a two-dimensional coordination polymer, the preparation step is a step of preparing the solution A of the Pt compound and the solution B of the benzenehexathiol derivative, and the polymer formation step may be a step in which the solution A and the solution B are mixed to prepare the single-phase solution. In such a case, it is more preferable that the solvent of the solution A is a mixed solvent of water and an aprotic polar solvent, and the solvent of the solution B is a polar solvent, and it is particularly preferable that the solvent of solution A is a mixed solvent of water and DMSO, and the solvent of solution B is dichloromethane.

Reaction temperature in the polymer formation step may be determined in consideration of a reaction rate. The reaction temperature may be determined in a range from the freezing point of the solvent to the boiling point of the solvent. The reaction temperature may be from 10°C to 90°C, may be from 10°C to 70°C, or may be from 20°C to 50°C.

Reaction time in the polymer formation step may be determined in consideration of reactivity, the growth degree of a two-dimensional coordination polymer, or the like. The reaction time may be from 1 second to 1 month, may be from 1 hour to 1 week, or may be from 5 hours to 1 day.

The polymer formation step is preferably performed under inert gas atmosphere.

Examples of the inert gas include nitrogen and argon.

The two-dimensional coordination polymer obtained in the polymer formation step preferably includes at least one of a constitutional unit represented by the following Formula (1) or a constitutional unit represented by the following Formula (2), and more preferably includes the constitutional unit represented by the following Formula (1) from the viewpoint of synthesis difficulty.

The two-dimensional coordination polymer including the constitutional unit represented by Formula (1) may include the constitutional unit represented by Formula (1) in a partial region of the molecular structure thereof.

The two-dimensional coordination polymer including the constitutional unit represented by Formula (2) may include the constitutional unit represented by Formula (2) in a partial region of the molecular structure thereof.

The two-dimensional coordination polymer may include the respective constitutional units of Formulae (1) to (2) in the identical molecular framework. In such a case, for the identification of the two-dimensional coordination polymer, the two-dimensional coordination polymer is regarded as a two-dimensional coordination polymer including a constitutional unit that can have the largest amount, of the constitutional units of Formulae (1) to (2), based on theoretical values, for convenience.

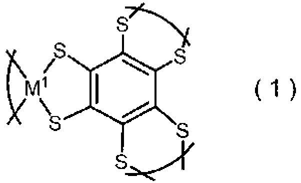

In Formula (1), M¹ represents Ni, Pd, or Pt, and preferably represents Ni or Pt.

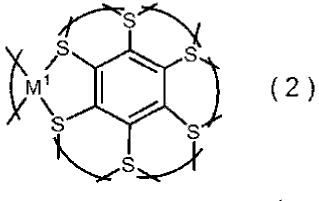

In Formula (2), M¹ represents Ni, Pd, or Pt, and preferably represents Ni or Pt.

In the present disclosure, the two-dimensional coordination polymer having the constitutional unit represented by Formula (1) is a two-dimensional coordination polymer in which 1.5 molar equivalents of metal atoms exist with respect to 1 molar equivalent of benzenehexathiol or the derivative thereof, and is also referred to as "M_{1.5}BHT-type two-dimensional coordination polymer" or "M_{1.5}BHT".

Examples of the two-dimensional coordination polymer including the constitutional unit represented by Formula (1) include a two-dimensional coordination polymer having a structure represented by the following Formula (1A).

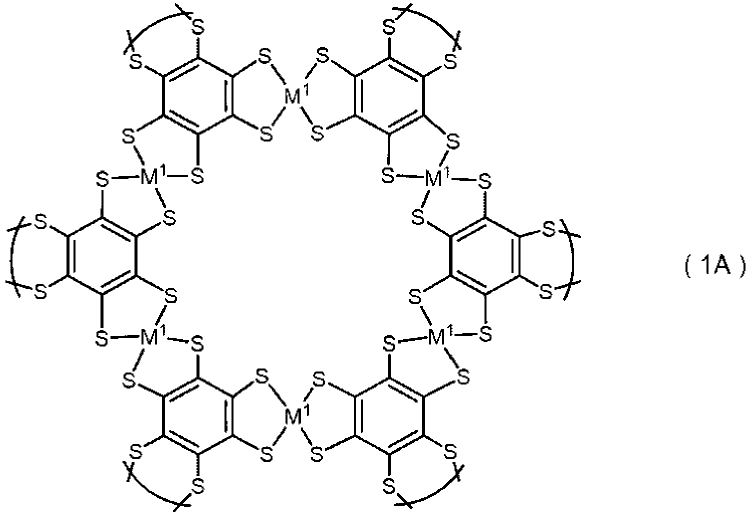

In the present disclosure, the two-dimensional coordination polymer having the constitutional unit represented by Formula (2) is a two-dimensional coordination polymer in which 3 molar equivalents of metal atoms exist with respect to 1 molar equivalent of benzenehexathiol or the derivative thereof, and is also referred to as "M₃BHT-type two-dimensional coordination polymer" or "M₃BHT".

Examples of the two-dimensional coordination polymer including the constitutional unit represented by Formula (2) include a two-dimensional coordination polymer having a structure represented by the following Formula (2A).

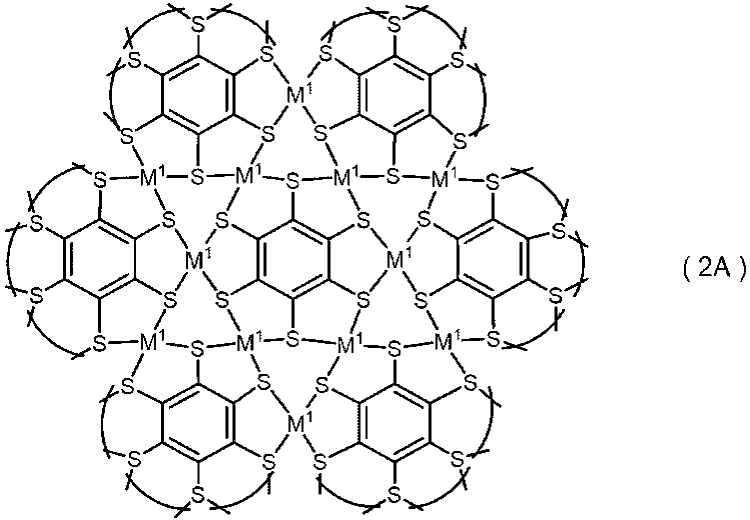

The particle diameter of the two-dimensional coordination polymer is not particularly limited, and is preferably in a range of from 3 nm to 1 µm, more preferably in a range of from 10 nm to 300 nm, and still more preferably in a range of from 30 nm to 100 nm. The particle diameter of the two-dimensional coordination polymer is measured by dynamic light scattering (DLS).

The two-dimensional coordination polymer obtained by the method of producing a two-dimensional coordination polymer according to the present disclosure may be a single-layer film or a multilayer film, or may be an aggregate of a two-dimensional coordination polymer including at least one selected from the group consisting of single-layer films and multilayer films.

### [Structural Change Step]

The method of producing a two-dimensional coordination polymer according to the present disclosure may further include a structural change step in which after the polymer formation step, the Ni compound, the Pd compound, or the Pt compound, or the solution A thereof is further added to the single-phase solution to produce the two-dimensional coordination polymer including the constitutional unit represented by Formula (2).

In the structural change step, the two-dimensional coordination polymer including the constitutional unit represented by Formula (1) obtained in the polymer formation step can be changed to the two-dimensional coordination polymer including the constitutional unit represented by Formula (2), and each of the two-dimensional coordination polymers described above can be selectively synthesized by the method of producing a two-dimensional coordination polymer according to the present disclosure.

The inclusion of the structural change step enables the two-dimensional coordination polymer including the constitutional unit represented by Formula (1) and the two-dimensional coordination polymer including the constitutional unit represented by Formula (2) to be easily separately produced by the method of producing a two-dimensional coordination polymer according to the present disclosure.

The kind of the Ni compound, the Pd compound, or the Pt compound in the structural change step may be the same as or different from the kind of the Ni compound, the Pd compound, or the Pt compound included in the solution A as long as M¹ in the two-dimensional coordination polymer including the constitutional unit represented by Formula (1) and M¹ in the two-dimensional coordination polymer including the constitutional unit represented by Formula (2) are identical metals.

In the case of including the structural change step, the amount of the Ni compound, the Pd compound, or the Pt compound in the polymer formation step is preferably from 0.5 molar equivalent to 1.9 molar equivalents, and more preferably from 1.0 molar equivalent to 1.5 molar equivalents with respect to 1 molar equivalent of benzenehexathiol or the derivative thereof from the viewpoint of forming the two-dimensional coordination polymer including the constitutional unit represented by Formula (1).

The amount of the Ni compound, the Pd compound, or the Pt compound added in the structural modification step is preferably from 1.1 molar equivalents to 2.5 molar equivalents, and more preferably from 1.5 molar equivalents to 2.0 molar equivalents with respect to 1 molar equivalent of benzenehexathiol or the derivative thereof used in the polymer formation step from the viewpoint of forming the two-dimensional coordination polymer including the constitutional unit represented by Formula (2).

It is preferable to use the Ni compound in the structural modification step from the viewpoint of a property of forming a two-dimensional coordination polymer.

It is preferable to use the solution of the Ni compound, the Pd compound, or the Pt compound from the viewpoint of a reaction rate and a property of forming a two-dimensional coordination polymer in the structural modification step.

A solvent used in the solution of the Ni compound, the Pd compound, or the Pt compound in the preparation step, and a preferred aspect thereof are similar to the solvent used in the solution of the Ni compound, the Pd compound, or the Pt compound, and the preferred aspect thereof.

Reaction temperature in the structural modification step may be determined in consideration of a reaction rate. The reaction temperature may be determined in a range from the freezing point of the solvent used to the boiling point of the solvent. The reaction temperature may be from 10°C to 90°C, may be from 10°C to 70°C, or may be from 20°C to 50°C.

Reaction time in the structural modification step may be determined in consideration of reactivity, the degree of the progression of the structural modification of a two-dimensional coordination polymer, or the like. The reaction time may be from 1 second to 1 month, may be from 1 minute to 1 week, or may be from 2.5 hours to 15 hours.

The structural modification step is preferably performed under inert gas atmosphere. Examples of the inert gas include nitrogen and argon.

### [Dissimilar Metal Polymer Formation Step]

It is preferable that the method of producing a two-dimensional coordination polymer according to the present disclosure further includes a dissimilar metal polymer formation step in which after the polymer formation step, a Mn compound, an Fe compound, a Co compound, a Ni compound, a Cu compound, a Zn compound, a Pd compound, or a Ag compound, or a solution C thereof is added to the single-phase solution.

In the dissimilar metal polymer formation step, a metal compound different from the metal species of the compound included in the solution A prepared in the preparation step is selected from the Mn compound, the Fe compound, the Co compound, the Ni compound, the Cu compound, the Zn compound, the Pd compound, or the Ag compound, and the metal compound or the solution C thereof is added.

For example, a compound other than the Ni compound, that is, "solution C of Mn compound, Fe compound, Co compound, Cu compound, Zn compound, Pd compound, or Ag compound" is added to the single-phase solution in the dissimilar metal polymer formation step in a case in which the solution A including the Ni compound is prepared in the preparation step in the production of the two-dimensional coordination polymer including the constitutional unit represented by Formula (1).

In one aspect, it is preferable to add the Mn compound, the Co compound, the Cu compound, or the Zn compound, or the solution C thereof in the dissimilar metal polymer formation step in a case in which M¹ is Ni in the production of the two-dimensional coordination polymers including the constitutional units represented by Formulae (1) to (3). In the aspect described above, the two-dimensional coordination polymer including a dissimilar metal is more efficiently synthesized in a large amount in a single-phase liquid.

In one aspect, it is preferable to add the Fe compound, the Ni compound, the Cu compound, the Pd compound, or the Ag compound, or the solution C thereof in the dissimilar metal polymer formation step in a case in which M¹ is Pt in the production of the two-dimensional coordination polymers including the constitutional units represented by Formulae (1) to (3). In the aspect described above, the two-dimensional coordination polymer including a dissimilar metal is more efficiently synthesized in a large amount in a single-phase liquid.

The Ni compound is as described above.

The Mn compound is not particularly limited, and examples thereof include manganese chloride, manganese bromide, manganese sulfate, manganese nitrate, a manganese tetrafluoroborate complex, a manganese acetylacetonate complex, a manganese ethylenediamine complex, a manganese ethylenediaminetetraacetate complex, and hydrates thereof.

The Fe compound is not particularly limited, and examples thereof include ferrous chloride, ferrous bromide, ferrous iodide, ferrous nitrate, ferrous sulfate, ferrous acetate, ferrous benzoate, an iron tetrafluoroborate complex, an iron acetylacetonate complex, an iron ethylenediamine complex, an iron ethylenediaminetetraacetate complex, and hydrates thereof.

The Co compound is not particularly limited, and examples thereof include cobalt chloride, cobalt bromide, cobalt iodide, cobalt nitrate, cobalt sulfate, cobalt acetate, cobalt benzoate, a cobalt tetrafluoroborate complex, a cobalt acetylacetonate complex, a cobalt ethylenediamine complex, a cobalt ethylenediaminetetraacetate complex, and hydrates thereof.

The Cu compound is not particularly limited, and examples thereof include cupric chloride, cupric bromide, cupric iodide, cupric nitrate, cupric sulfate, cupric acetate, cupric benzoate, a copper tetrafluoroborate complex, a copper acetylacetonate complex, a copper ethylenediamine complex, a copper ethylenediaminetetraacetate complex, and hydrates thereof.

The Ag compound is not particularly limited, and examples thereof include a silver tetrafluoroborate complex, silver nitrate, silver perchlorate, silver acetate, and hydrates thereof.

The Zn compound is not particularly limited, and examples thereof include zinc formate, zinc acetate, zinc lactate, zinc chloride, zinc bromide, zinc carbonate, zinc nitrate, zinc sulfate, zinc oxide, a zinc tetrafluoroborate complex, a zinc acetylacetonate complex, a zinc ethylenediamine complex, a zinc ethylenediaminetetraacetate complex, and hydrates thereof.

Especially, the Zn compound is preferably zinc acetate, a zinc tetrafluoroborate complex, or a hydrate thereof from the viewpoint of reactivity, stability, and a property of forming a two-dimensional coordination polymer.

In the dissimilar metal polymer formation step, the solution C of the Mn compound, the Fe compound, the Co compound, the Ni compound, the Cu compound, the Zn compound, the Pd compound, or the Ag compound is preferably prepared from the viewpoint of a reaction rate and a property of forming a two-dimensional coordination polymer.

A solvent used in the solution C is not particularly limited as long as the compound can be dissolved in the solvent. The solvent is preferably a polar solvent, more preferably a protic polar solvent, and still more preferably an alcohol compound from the viewpoint of solubility and a property of forming a two-dimensional coordination polymer.

Such a specific solvent and a preferred aspect thereof are similar to the solvent used in the solution of the Ni compound, the Pd compound, or the Pt compound, and the preferred aspect thereof.

The amount of the Mn compound, the Fe compound, the Co compound, the Ni compound, the Cu compound, the Zn compound, the Pd compound, or the Ag compound added in the dissimilar metal polymer formation step is preferably from 0.1 molar equivalent to 10.0 molar equivalents, more preferably from 1.1 molar equivalents to 2.5 molar equivalents, and still more preferably from 1.5 molar equivalents to 2.0 molar equivalents with respect to 1 molar equivalent of the Ni compound, the Pd compound, or the Pt compound from the viewpoint of forming the two-dimensional coordination polymer including the constitutional unit represented by Formula (2).

The two-dimensional coordination polymer obtained in the dissimilar metal polymer formation step may be a two-dimensional coordination polymer which includes the constitutional unit represented by Formula (2) and a constitutional unit represented by the following Formula (3), and in which M¹ is Ni or Pt, and M² is Mn, Fe, Co, Ni, Cu, Zn, Pd, or Ag. However, M² does not represent Ni in a case in which M¹ is Ni.

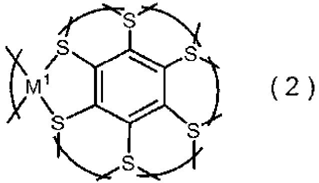

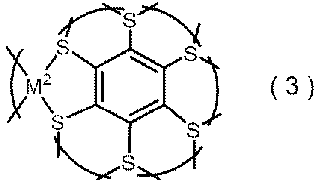

The two-dimensional coordination polymer including the constitutional units represented by Formulae (2) to (3) may include the constitutional units represented by Formulae (2) to (3) in at least a partial region of the molecular structure thereof.

The two-dimensional coordination polymer including the constitutional units represented by Formulae (2) to (3) may further include the constitutional unit represented by Formula (1) in the identical molecular framework. In such a case, for the identification of the two-dimensional coordination polymer, the two-dimensional coordination polymer is referred to as a two-dimensional coordination polymer including constitutional units represented by Formulae (2) and (3), for convenience.

Examples of the two-dimensional coordination polymer obtained in the dissimilar metal polymer formation step include a two-dimensional coordination polymer having a structure represented by the following Formula (3A).

The two-dimensional coordination polymer having the structure represented by the following Formula (3A) is a two-dimensional coordination polymer in which 2 molar equivalents of metal atoms (total sum of M¹ and M²) exist with respect to 1 molar equivalent of benzenehexathiol or the derivative thereof, and is also referred to as "M¹₁M²₂BHT". The number of moles is a theoretical value, and the percentages of M¹ and M² can vary depending on a factor such as the reactivity of a metal species.

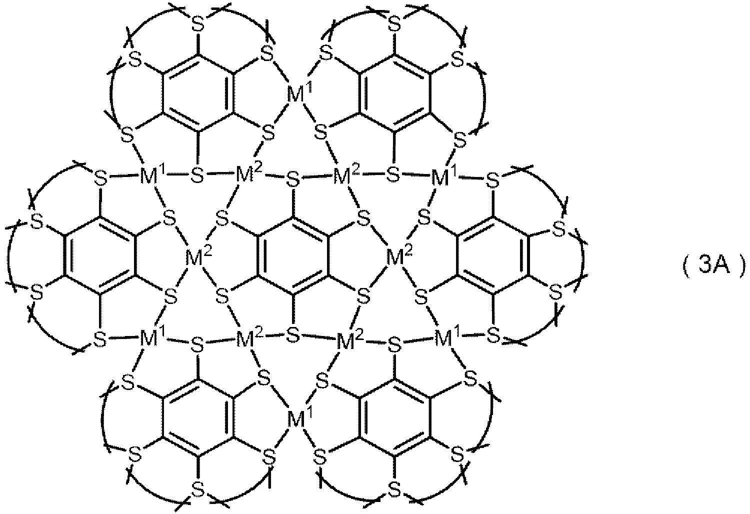

In the two-dimensional coordination polymer obtained in the dissimilar metal polymer formation step, a molar ratio (M¹:M²) between M¹ in Formula (2) and M² in Formula (3) is preferably from 1.0:0.1 to 1.0:3.0, more preferably from 1.0:0.1 to 1.0:2.5, and still more preferably from 1.0:0.1 to 1.0:2.3.

It is easy to more efficiently synthesize the above-described two-dimensional coordination polymer including the constitutional unit represented by the following Formula (2) and the constitutional unit represented by the following Formula (3) in a large amount in a case in which the molar ratio (M¹:M²) is in the range described above.

The concentration of the solution C is preferably from 10.00 mmol/L to 40.00 mmol/L, and more preferably from 20.00 mmol/L to 30.00 mmol/L. It is easy to more efficiently synthesize the two-dimensional coordination polymer having the constitutional units represented by Formulae (2) to (3) in a large amount in a case in which the concentration of the solution C is within the range described above.

The method of producing a two-dimensional coordination polymer according to the present disclosure may include an additional step other than the steps described above.

The additional step is not particularly limited, and examples thereof include an isolation step of isolating an obtained two-dimensional coordination polymer, a washing step of washing the isolated two-dimensional coordination polymer, and a drying step of drying the isolated or washed two-dimensional coordination polymer.

### [Application]

An application of the two-dimensional coordination polymer produced by the method of producing a two-dimensional coordination polymer according to the present disclosure is not particularly limited, and preferred examples thereof include conductive materials, catalysts, electrocatalysts, photocatalysts, energy storage materials, photo-sensors (for example, ultraviolet to near-infrared rays), chemical resistivity sensors, electrochemical sensors, solution gate FET (field effect transistor) sensors, hole transport materials, magnetic materials, and electrode materials.

Depending on an application of the two-dimensional coordination polymer produced by the method of producing a two-dimensional coordination polymer according to the present disclosure, for example: the two-dimensional coordination polymer may be isolated and used on an as-is basis, or the two-dimensional coordination polymer may be mixed with another component, and the mixture may be used; a single-phase solution including the obtained two-dimensional coordination polymer may be used on an as-is basis, or the solution may be mixed with another component, and the mixture may be used; and a single-phase solution including the obtained two-dimensional coordination polymer may be applied to a substrate on an as-is basis, dried, and used, or the solution may be mixed with another component, and the mixture may be applied to a substrate, dried, and used.

### <Two-Dimensional Coordination Polymer>

The two-dimensional coordination polymer according to the present disclosure includes a constitutional unit represented by the following Formula (2) and a constitutional unit represented by the following Formula (3), wherein the following M¹ is Ni or Pt, and the following M² is Mn, Fe, Co, Ni, Cu, Zn, Pd, or Ag. However, M² does not represent Ni in a case in which M¹ is Ni.

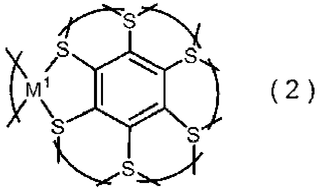

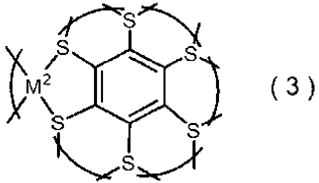

In the two-dimensional coordination polymer according to the present disclosure, a molar ratio (M¹:M²) between M¹ and M² is preferably from 1.0:0.1 to 1.0:3.0, more preferably from 1.0:0.1 to 1.0:2.5, and still more preferably from 1.0:0.1 to 1.0:2.3.

It is easy to more efficiently synthesize the above-described two-dimensional coordination polymer including the constitutional unit represented by the following Formula (2) and the constitutional unit represented by the following Formula (3) in a large amount in a case in which the molar ratio (M¹:M²) is in the range described above.

The molar ratio (M¹:M²) is determined by scanning electron microscope energy dispersive X-ray spectrometry (SEM-EDX) using JCM-7000 NEOSCOPE TM BENCHTOP SEM manufactured by JEOL Ltd.

The two-dimensional coordination polymer according to the present disclosure is preferably produced by the method of producing a two-dimensional coordination polymer according to the present disclosure.

An application of the two-dimensional coordination polymer according to the present disclosure is not particularly limited, and preferred examples thereof include the applications of the two-dimensional coordination polymer produced by the above-described method of producing a two-dimensional coordination polymer according to the present disclosure.

The two-dimensional coordination polymer according to the present disclosure is obtained by the method of producing a two-dimensional coordination polymer according to the present disclosure. In accordance with the present disclosure, a two-dimensional coordination polymer (M=Ni or the like) such as an M_{1.5}BHT-type or M₃BHT-type two-dimensional coordination polymer is efficiently obtained by large-scale synthesis.

The preferred structure and aspect of the two-dimensional coordination polymer according to the present disclosure are identical with the preferred structure and aspect in the method of producing a two-dimensional coordination polymer according to the present disclosure.

### <Solution for Forming Two-Dimensional Coordination Polymer>

A solution for forming the two-dimensional coordination polymer according to the present disclosure is a single-phase solution including a Ni compound, a Pd compound, or a Pt compound, and at least one of benzenehexathiol or a derivative of benzenehexathiol.

In accordance with the present disclosure, large-scale synthesis of the two-dimensional coordination polymer is enabled.

The preferred aspect of the Ni, Pd, or Pt compound is identical with the preferred aspect of "Ni compound, Pd compound, or Pt compound" in the above-described method of producing a two-dimensional coordination polymer according to the present disclosure.

A solvent included in the solution for forming a two-dimensional coordination polymer according to the present disclosure is not particularly limited, and may be a solvent in which a Ni compound, a Pd compound, or a Pt compound, and at least one of benzenehexathiol or a derivative of benzenehexathiol which are raw materials for forming a two-dimensional coordination polymer can be dissolved to form a single phase. Examples of the solvent include the solvents of which examples are mentioned in the description of the method of producing a two-dimensional coordination polymer according to the present disclosure.

### Examples

The present disclosure is described in detail below with reference to Examples. However, the present disclosure is not limited to the following Examples. Items described in the following Examples may be modified without departing from the gist of the present disclosure, if appropriate.

### <Reagents>

The details of reagents used in Examples and Comparative Examples are described below.
Ni(OAc)₂: nickel acetate tetrahydrate, manufactured by KANTO CHEMICAL CO., INC.
BHT: benzenehexathiol, synthetic product by the following method
Methanol: manufactured by KANTO CHEMICAL CO., INC.
Tetrahydrofuran: manufactured by KANTO CHEMICAL CO., INC.
Mn(OAc)₂: manganese(II) acetate tetrahydrate, manufactured by FUJIFILM Wako Pure Chemical Corporation
Zn(OAc)₂: zinc acetate dihydrate, manufactured by FUJIFILM Wako Pure Chemical Corporation
Cu(OAc)₂: copper(II) acetate monohydrate, manufactured by KANTO CHEMICAL CO., INC.
FeSO₄: iron(II) sulfate heptahydrate, manufactured by FUJIFILM Wako Pure Chemical Corporation
Co(OAc)₂: cobalt(II) acetate tetrahydrate, manufactured by KANTO CHEMICAL CO., INC.

### <Synthesis of BHT>

Benzenehexathiol (BHT) was synthesized according to the description of a literature (Jennifer A. Harnisch, Robert J. Angelici, Inorganica Chimica Acta, Volumes 300-302, 20 April 2000, Pages 273-279).

### <Synthesis of SnBHT>

A benzenehexathiol tin protector (SnBHT) was synthesized according to the description of a literature (Tigmansu Pal, Shotaro Doi, Hiroaki Maeda, Keisuke Wada, Choon Meng Tan, Naoya Fukui, Ryota Sakamoto, Shinji Tsuneyuki, Sono Sasaki and Hiroshi Nishihara, Chem. Sci., Volumes 10, 17 April 2019, Pages 5218-5225).

### <Pretreatment>

Unless otherwise specified, all solvents were degassed with nitrogen before use.

### <Each Analysis Method>

UV-Visible Near Infrared (UV-Vis-NIR) Spectroscopy
An analysis by UV-visible near infrared spectroscopy was performed using "V-770 UV-VISIBLE/NIR SPECTROPHOTOMETER" (manufactured by JASCO Corporation).

### Raman Spectroscopy

An analysis by Raman spectroscopy was performed using "NRS-5500 RAMAN SPECTROMETER" (manufactured by JASCO Corporation).

### Energy Dispersion-Type X-Ray Spectroscopy (EDS)

The analysis by the energy dispersion-type X-ray spectroscopy was performed using "JCM-7000 NEOSCOPE TM BENCHTOP SEM" (manufactured by JEOL Ltd.).

### Dynamic Light Scattering (DLS)

An analysis by dynamic light scattering was performed using "NANOPARTICA SZ-100V2 SERIES" (manufactured by HORIBA, Ltd.).

Characteristic peak tops in Ni_{1.5}BHT measured in the UV-Vis-NIR spectroscopy and the Raman spectroscopy, and characteristic peak tops in two-dimensional coordination polymers produced as described later are set forth in Table 1. The energy of the Kα-ray of each element in the EDS analysis is set forth in Table 2. In Examples described later, compounds were identified by comparison of obtained two-dimensional coordination polymers with the characteristic peak tops and energy values set forth in the following Tables 1 to 2.

**(Table 1)**

| | UV-Vis-NIR/nm | Raman (main peak)/cm⁻¹ | Raman (sub peak)/cm⁻¹ |
|---|---|---|---|
| Ni_{1.5}BHT | 965 | 368 | 465 |
| Ni₃BHT | 1108 | 371 | 417 |
| Ni₁Mn₂BHT | 992 | 367 | 468 |
| Ni₁Co₂BHT | 1120 | 364 | 407 |
| Ni₁Zn₂BHT | 1110 | 371 | 466 |
| Ni₁Cu₂BHT | 806 | 354 | 394 |
| Pt_{1.5}BHT | 1085 | 384 | 425 |

**(Table 2)**

| | Energy/keV |
|---|---|
| NiKα | 7.47 |
| PtLα | 9.44 |
| MnKα | 5.89 |
| CoKα | 6.92 |
| ZnKα | 8.63 |
| CuKα | 8.04 |
| FeKα | 6.40 |
| SKα | 2.31 |

### (Example 1: Synthesis of Ni_{1.5}BHT)

The following operations were performed under argon atmosphere in a glove box.

Nickel acetate (Ni(OAc)₂) was dissolved in methanol to prepare 0.225 mM (= 0.225 mmol/L) of a methanol solution of nickel acetate.

Benzenehexathiol (BHT) was dissolved in tetrahydrofuran to prepare 0.15 mM (= 0.15 mmol/L) of a tetrahydrofuran solution of BHT.

At 25°C, 10 mL of the produced methanol solution of nickel acetate was quickly added to 10 mL of the produced tetrahydrofuran solution of BHT, followed by leaving the resultant to stand for 6 hours to obtain a dark brown Ni_{1.5}BHT solution.

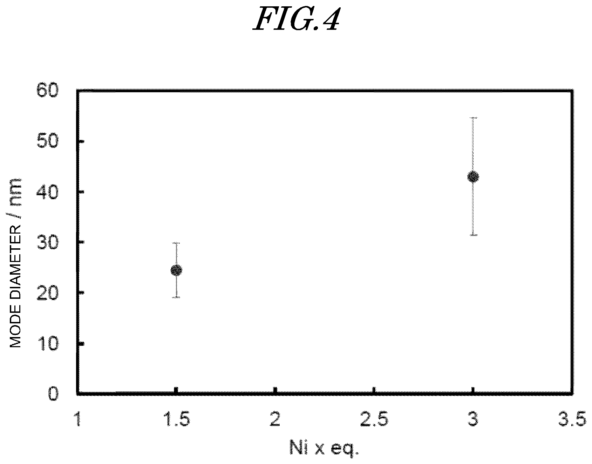

Ni_{1.5}BHT was identified by performing the analyses by UV-visible near infrared (UV-Vis-NIR) spectroscopy, Raman spectroscopy, and energy dispersion-type X-ray spectroscopy (EDS), and comparing obtained data and the above-described characteristic peak tops and energy values set forth in Tables 1 to 2. An EDS spectrum and the energy value of the Kα-ray of each element in the EDS analysis set forth in Table 2 were compared to identify an element. FIG. 4 illustrates the results of the volume-average particle diameters of two-dimensional coordination polymers in Examples 1 and 3, obtained by dynamic light scattering (DLS) analysis. As illustrated in FIG. 4, the two-dimensional coordination polymer in Example 1 had a volume-average particle diameter of 25 nm and a standard error of 5 nm.

### (Example 2: Synthesis of Ni_{1.5}BHT)

The following operations were performed under argon atmosphere in a glove box.

Nickel acetate (Ni(OAc)₂) was dissolved in methanol to prepare 0.15 mM (= 0.15 mmol/L) of a methanol solution of nickel acetate.

Benzenehexathiol (BHT) was dissolved in tetrahydrofuran to prepare 0.15 mM (= 0.15 mmol/L) of a tetrahydrofuran solution of BHT.

At 25°C, 10 mL of the produced methanol solution of nickel acetate was quickly added to 10 mL of the produced tetrahydrofuran solution of BHT, followed by leaving the resultant to stand for 6 hours to obtain a dark brown Ni_{1.5}BHT solution.

Ni_{1.5}BHT was identified by performing the analyses by UV-visible near infrared (UV-Vis-NIR) spectroscopy, energy dispersion-type X-ray spectroscopy (EDS), and Raman spectroscopy, and comparing obtained data and the above-described characteristic peak tops and energy values set forth in Tables 1 to 2. The obtained dark brown Ni_{1.5}BHT solution was found to be a single-phase colloidal solution by dynamic light scattering (DLS) analysis. An EDS spectrum and the energy value of the Kα-ray of each element in the EDS analysis set forth in Table 2 were compared to identify an element.

### (Example 3: Synthesis of Ni₃BHT)

The following operations were performed under argon atmosphere in a glove box.

Nickel acetate (Ni(OAc)₂) was dissolved in methanol to prepare 0.45 mM (= 0.45 mmol/L) of a methanol solution of nickel acetate.

Benzenehexathiol (BHT) was dissolved in tetrahydrofuran to prepare 0.15 mM (= 0.15 mmol/L) of a tetrahydrofuran solution of BHT.

At 25°C, 10 mL of the produced methanol solution of nickel acetate was quickly added to 10 mL of the produced tetrahydrofuran solution of BHT, followed by leaving the resultant to stand for 6 hours to obtain a blackish brown Ni₃BHT solution.

Ni₃BHT was identified by using UV-visible near infrared (UV-Vis-NIR) spectroscopy, energy dispersion-type X-ray spectroscopy (EDS), and Raman spectroscopy. FIG. 4 illustrates the results of the volume-average particle diameters of the two-dimensional coordination polymers in Examples 1 and 3, obtained by the dynamic light scattering (DLS) analysis. As illustrated in FIG. 4, the two-dimensional coordination polymer in Example 3 had a volume-average particle diameter of 43 nm and a standard error of 12 nm.

The dark brown Ni_{1.5}BHT solution was found to be a single-phase colloidal solution by the dynamic light scattering (DLS) analysis.

An EDS spectrum and the energy value of the Kα-ray of each element in the EDS analysis set forth in Table 2 were compared to identify an element.

### (Example 4: Synthesis of Ni₃BHT from Ni_{1.5}BHT)

The following operations were performed under argon atmosphere in a glove box.

Nickel acetate (Ni(OAc)₂) was dissolved in methanol to prepare 30 mM (= 30 mmol/L) of a methanol solution of nickel acetate.

At 25°C, 0.1 mL of the produced methanol solution of nickel acetate was quickly added to a total amount of the Ni_{1.5}BHT solution obtained in Example 2, followed by leaving the resultant to stand for 2.5 hours to obtain a blackish brown Ni₃BHT solution.

Ni₃BHT was identified by using UV-visible near infrared (UV-Vis-NIR) spectroscopy, energy dispersion-type X-ray spectroscopy (EDS), and Raman spectroscopy. The obtained dark brown Ni_{1.5}BHT solution was found to be a single-phase colloidal solution by the dynamic light scattering (DLS) analysis. An EDS spectrum and the energy value of the Kα-ray of each element in the EDS analysis set forth in Table 2 were compared to identify an element.

### (Example 5: Synthesis of Ni₁Mn₂BHT)

The following operations were performed under argon atmosphere in a glove box.

Manganese acetate (Mn(OAc)₂) was dissolved in methanol to prepare 30 mM (= 30 mmol/L) of a methanol solution of manganese acetate.

At 25°C, 10 mL of the produced methanol solution of manganese acetate was quickly added to a total amount of the Ni_{1.5}BHT solution obtained in Example 2, followed by leaving the resultant to stand for 2.5 hours to obtain a dark brown Ni₁Mn₂BHT solution.

Ni₁Mn₂BHT was identified by using UV-visible near infrared (UV-Vis-NIR) spectroscopy, energy dispersion-type X-ray spectroscopy (EDS), and Raman spectroscopy. The characteristic peak tops observed in the UV-Vis-NIR spectra and the Raman spectra are set forth in Table 1. An EDS spectrum and the energy value of the Kα-ray of each element in the EDS analysis set forth in Table 2 were compared to identify an element.

### (Example 6: Synthesis of Ni₁Zn₂BHT)

The following operations were performed under argon atmosphere in a glove box.

Zinc acetate (Zn(OAc)₂) was dissolved in methanol to prepare 30 mM (= 30 mmol/L) of a methanol solution of zinc acetate.

At 25°C, 10 mL of the produced methanol solution of zinc acetate was quickly added to a total amount of the Ni_{1.5}BHT solution obtained in Example 2, followed by leaving the resultant to stand for 2.5 hours to obtain a brown Ni₁Zn₂BHT solution.

Ni₁Zn₂BHT was identified by using UV-visible near infrared (UV-Vis-NIR) spectroscopy, energy dispersion-type X-ray spectroscopy (EDS), and Raman spectroscopy. The characteristic peak tops observed in the UV-Vis-NIR spectra and the Raman spectra are set forth in Table 1. An EDS spectrum and the energy value of the Kα-ray of each element in the EDS analysis set forth in Table 2 were compared to identify an element.

### (Example 7: Synthesis of Ni₁Cu₂BHT)

The following operations were performed under argon atmosphere in a glove box.

Copper acetate (Cu(OAc)₂) was dissolved in methanol to prepare 30 mM (= 30 mmol/L) of a methanol solution of copper acetate.

At 25°C, 10 mL of the produced methanol solution of copper acetate was quickly added to a total amount of the Ni_{1.5}BHT solution obtained in Example 2, followed by leaving the resultant to stand for 2.5 hours to obtain a green-brown Ni₁Cu₂BHT solution.

Ni₁Cu₂BHT was identified by using UV-visible near infrared (UV-Vis-NIR) spectroscopy, energy dispersion-type X-ray spectroscopy (EDS), and Raman spectroscopy. The characteristic peak tops observed in the UV-Vis-NIR spectra and the Raman spectra are set forth in Table 1. An EDS spectrum and the energy value of the Kα-ray of each element in the EDS analysis set forth in Table 2 were compared to identify an element.

### (Example 8: Synthesis of Ni₁Co₂BHT)

The following operations were performed under argon atmosphere in a glove box.

Cobalt acetate (Co(OAc)₂) was dissolved in methanol to prepare 30 mM (= 30 mmol/L) of a methanol solution of copper acetate.

At 25°C, 10 mL of the produced methanol solution of cobalt acetate was quickly added to a total amount of the Ni_{1.5}BHT solution obtained in Example 2, followed by leaving the resultant to stand for 2.5 hours to obtain a brown Ni₁Co₂BHT solution.

Ni₁Co₂BHT was identified by using UV-visible near infrared (UV-Vis-NIR) spectroscopy, energy dispersion-type X-ray spectroscopy (EDS), and Raman spectroscopy. The characteristic peak tops observed in the UV-Vis-NIR spectra and the Raman spectra are set forth in Table 1. An EDS spectrum and the energy value of the Kα-ray of each element in the EDS analysis set forth in Table 2 were compared to identify an element.

### (Example 9: Synthesis of Ni₁Fe₂BHT)

The following operations were performed under argon atmosphere in a glove box.

Iron(II) sulfate (FeSO₄) was dissolved in methanol to prepare 30 mM (= 30 mmol/L) of a methanol solution of iron(II) sulfate.

At 25°C, 10 mL of the produced methanol solution of cobalt acetate was quickly added to a total amount of the Ni_{1.5}BHT solution obtained in Example 2, followed by leaving the resultant to stand for 2.5 hours to obtain a black Ni₁Fe₂BHT precipitate.

Ni₁Fe₂BHT was identified by using energy dispersion-type X-ray spectroscopy (EDS). Analysis was performed. The characteristic peak tops observed in the UV-Vis-NIR spectra and the Raman spectra are set forth in Table 1.

### (Example 10: Synthesis of Pt_{1.5}BHT)

All the steps were performed under atmospheric air.

Potassium tetrachloroplatinate(II) (K₂[PtCl₄]) was dissolved in pure water, to prepare 0.5 mM (= 0.5 mmol/L) of aqueous potassium tetrachloroplatinate(II) solution.

A benzenehexathiol tin protector (SnBHT) was dissolved in dichloromethane, to prepare 1 mM (= 1 mmol/L) of a SnBHT dichloromethane solution.

At 25°C, 2.5 mL of the produced aqueous potassium tetrachloroplatinate(II) solution and 5 mL of dimethylsulfoxide (DMSO) were mixed, and the mixture was then quickly mixed with 1.25 mL of a SnBHT dichloromethane solution, followed by leaving the resultant to stand for 22.5 hours, to obtain a dark brown Pt_{1.5}BHT solution.

Pt_{1.5}BHT was identified by analysis by UV-visible near infrared (UV-Vis-NIR) spectroscopy, energy dispersion-type X-ray spectroscopy (EDS), and Raman spectroscopy. The characteristic peak tops observed in the UV-Vis-NIR spectra and the Raman spectra are set forth in Table 1.

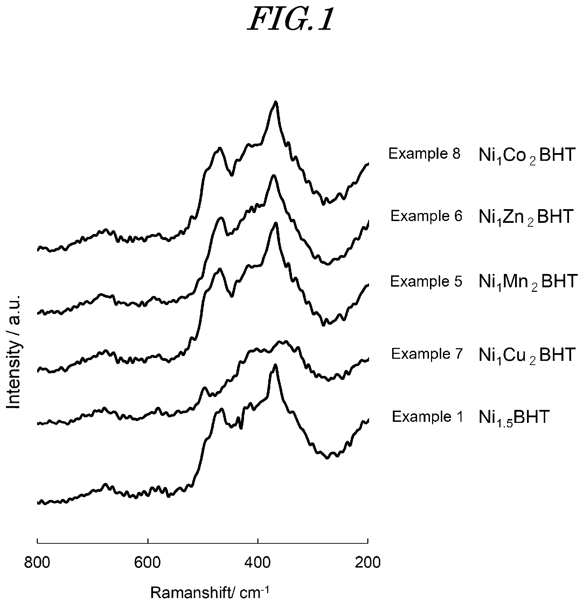

FIG. 1 illustrates the Raman spectra of the two-dimensional coordination polymers in Examples 1, 5, 6, and 7. As illustrated in FIG. 1, the characteristic peaks of the two-dimensional coordination polymer in each of Examples were observed in Ni and BHT.

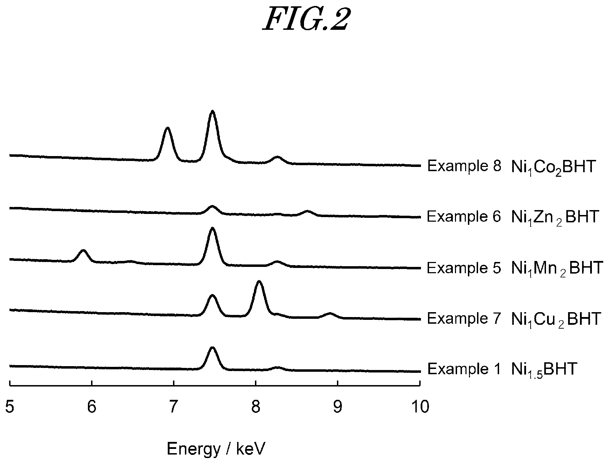

FIG. 2 illustrates the EDS spectra of the two-dimensional coordination polymers in Examples 1, 5, 6, and 7. As illustrated in FIG. 2, the characteristic energy values of the two-dimensional coordination polymer in each of Examples were observed in Ni and BHT.

### (Example 11: Synthesis of Ni_{1.5}BHT)

The following operations were performed under argon atmosphere in a glove box.

Nickel acetate (Ni(OAc)₂) was dissolved in methanol to prepare 0.15 mmol/L of a methanol solution of nickel acetate.

Benzenehexathiol (BHT) was dissolved in acetone to prepare 0.15 mM (= 0.15 mmol/L) of acetone solution of BHT.

At 25°C, 10 mL of the produced methanol solution of nickel acetate was quickly added to 10 mL of the produced acetone solution of BHT, followed by leaving the resultant to stand at room temperature (25 ± 1°C) for 6 hours to obtain a dark brown Ni_{1.5}BHT solution.

### (Example 12: Synthesis of Ni₃BHT)

The following operations were performed under argon atmosphere in a glove box.

Nickel acetate (Ni(OAc)₂) was dissolved in methanol to prepare 0.45 mmol/L of a methanol solution of nickel acetate.

Benzenehexathiol (BHT) was dissolved in acetone to prepare 0.15 mmol/L of an acetone solution of BHT.

At 25°C, 10 mL of the produced methanol solution of nickel acetate was quickly added to 10 mL of the produced acetone solution of BHT, followed by leaving the resultant to stand at room temperature (25 ± 1°C) for 6 hours to obtain a dark brown Ni₃BHT solution.

The above-described two-dimensional coordination polymers in Examples 11 to 12 were identified using UV-visible near infrared (UV-Vis-NIR) spectroscopy.

### (Example 13: Synthesis of Pt₁M₂BHT (M = Ag, Cu, Fe, Ni, or Pd))

Iron(II) tetrafluoroborate was dissolved in pure water, to prepare 20 mM (= 20 mmol/L) of an aqueous iron(II) tetrafluoroborate solution. At 25°C, 1.285 mL of the produced an aqueous iron(II) tetrafluoroborate solution was quickly added to 5 mL of the Pt_{1.5}BHT solution obtained in Example 10, followed by leaving the resultant to stand for 2.5 hours to obtain a single-phase solution including Pt₁Fe₂BHT.

In a similar manner except that AgBF₄, Cu(BF₄)₂, Ni(BF₄)₂, and K₂[PdCl₄] were used instead of iron(II) tetrafluoroborate (Fe(BF₄)₂), Pt₁Ag₂BHT, Pt₁Cu₂BHT, Pt₁Ni₂BHT, and Pt₁Pd₂BHT were obtained, respectively.

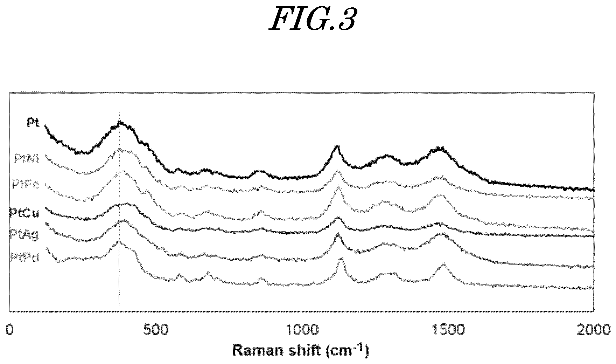

Each Pt₁M₂BHT was identified by analysis by energy dispersion-type X-ray spectroscopy (EDS) and Raman spectroscopy. FIG. 3 illustrates the Raman spectrum of each Pt₁M₂BHT in Example 13. As illustrated in FIG. 3, both of a characteristic peak in Pt and a characteristic peak in BHT were observed in the Raman spectrum of each Pt₁M₂BHT.

The method of producing a two-dimensional coordination polymer according to the present disclosure enables large-scale synthesis of a two-dimensional coordination polymer, as described in Examples as described above. It was found that a novel two-dimensional coordination polymer can be produced.

The entire contents of the disclosure by Japanese Patent Application No. 2023-149526 filed on September 14, 2023 are incorporated herein by reference.

All documents, patent applications, and technical standards described in this specification are herein incorporated by reference to the same extent as if each individual document, patent application, or technical standard was specifically and individually indicated to be incorporated by reference.

## Claims

1. A method of producing a two-dimensional coordination polymer, comprising:
a preparation step of preparing a Ni compound, a Pd compound, or a Pt compound, or a solution A thereof, and benzenehexathiol, a derivative of benzenehexathiol, or a solution B comprising at least one thereof; and
a polymer formation step of preparing a single-phase solution comprising the Ni compound, the Pd compound, or the Pt compound, and the benzenehexathiol, and producing a two-dimensional coordination polymer in the single-phase solution.

2. The method of producing a two-dimensional coordination polymer according to claim 1, wherein the obtained two-dimensional coordination polymer comprises a constitutional unit represented by the following Formula (1): 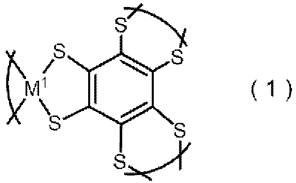 wherein in Formula (1), M¹ represents Ni, Pd, or Pt.

3. The method of producing a two-dimensional coordination polymer according to claim 2, wherein the M¹ is Ni or Pt.

4. The method of producing a two-dimensional coordination polymer according to claim 1, wherein
the preparation step is a step of preparing the solution A of the Ni compound, the Pd compound, or the Pt compound, and the solution B comprising at least one of the benzenehexathiol or a derivative thereof, and
the polymer formation step is a step of mixing the solution A and the solution B to prepare the single-phase solution.

5. The method of producing a two-dimensional coordination polymer according to claim 4, wherein
a solvent of the solution A is an alcohol compound, and
a solvent of the solution B is an aprotic polar solvent.

6. The method of producing a two-dimensional coordination polymer according to claim 4, wherein
a solvent of the solution A is a mixed solvent of water and an aprotic polar solvent, and
a solvent of the solution B is a polar solvent.

7. The method of producing a two-dimensional coordination polymer according to claim 2, further comprising a structural change step in which after the polymer formation step, the Ni compound, the Pd compound, or the Pt compound, or the solution A thereof is further added to the single-phase solution to produce a two-dimensional coordination polymer comprising a constitutional unit represented by the following Formula (2): 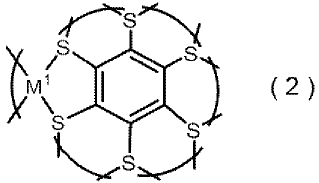 wherein in Formula (2), M¹ represents Ni, Pd, or Pt.

8. The method of producing a two-dimensional coordination polymer according to claim 1 or 2, further comprising:
a dissimilar metal polymer formation step in which after the polymer formation step, a Mn compound, an Fe compound, a Co compound, a Ni compound, a Cu compound, a Zn compound, a Pd compound, or a Ag compound, or a solution C thereof is added to the single-phase solution.

9. The method of producing a two-dimensional coordination polymer according to claim 4 or 5, wherein the amount of the Ni compound, the Pd compound, or the Pt compound in the preparation step is from 1.4 molar equivalents to 1.6 molar equivalents with respect to 1 molar equivalent of the benzenehexathiol or the derivative thereof.

10. The method of producing a two-dimensional coordination polymer according to claim 4 or 5, wherein the amount of the Ni compound, the Pd compound, or the Pt compound in the preparation step is from 2.9 molar equivalents to 3.1 molar equivalents with respect to 1 molar equivalent of the benzenehexathiol or the derivative thereof.

11. A two-dimensional coordination polymer comprising a constitutional unit represented by the following Formula (2) and a constitutional unit represented by the following Formula (3), wherein
M¹ is Ni or Pt, and
M² is Mn, Fe, Co, Ni, Cu, Zn, Pd, or Ag
(wherein the M² does not represent Ni in a case in which the M¹ is Ni).

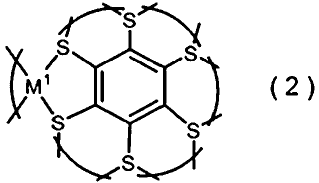

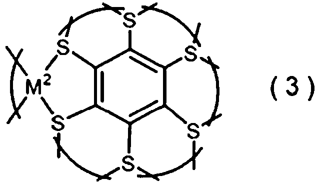

12. The two-dimensional coordination polymer according to claim 11, wherein a molar ratio between the M¹ and the M² (M¹:M²) is from 1.0:0.1 to 1.0:3.0.

13. A two-dimensional coordination polymer obtained by the method according to claim 1 or 2.

14. A solution for forming a two-dimensional coordination polymer, comprising a single-phase solution that comprises:
a Ni compound, a Pd compound, or a Pt compound; and
at least one of benzenehexathiol or a derivative of benzenehexathiol.
